Europäisches Patentamt

(19) European Patent Office

Office européen des brevets

(11) Veröffentlichungsnummer: **0 085 148**
**B1**

(12) # EUROPÄISCHE PATENTSCHRIFT

(45) Veröffentlichungstag der Patentschrift:
02.11.88

(51) Int. Cl.⁴: **G 01 D 3/02**

(21) Anmeldenummer: 82110706.7

(22) Anmeldetag: 19.11.82

(54) Einrichtung zur Fehlerkorrektur bei Positionsmesssystemen.

(30) Priorität: 15.01.82 DE 3201005

(73) Patentinhaber: **Dr. Johannes Heidenhain GmbH,**
**Nansenstrasse 17, D-8225 Traunreut (DE)**

(43) Veröffentlichungstag der Anmeldung:
10.08.83 Patentblatt 83/32

(72) Erfinder: **Spies, Alfons, Dipl.- Ing.,**
**Wopfnerstrasse, D-8221 Seebruck (DE)**

(45) Bekanntmachung des Hinweises auf die Patenterteilung:
02.11.88 Patentblatt 88/44

(84) Benannte Vertragsstaaten:
AT CH FR GB IT LI NL SE

(56) Entgegenhaltungen:
EP-A-0 039 082
DE-A-1 552 273
DE-A-1 623 905
DE-B-1 138 558
DE-C-1 214 892
GB-A-2 001 786
GB-A-2 034 053
US-A-4 143 267

LIBER, STOCKHOLM 1988

EP 0 085 148 B1

0 085 148

**Beschreibung**

Die Erfindung betrifft eine Einrichtung zur Fehlerkorrektur, insbesondere von Maschinenfehlern und/oder Teilungsfehlern, gemäß dem ersten Teil des Anspruchs 1.

Einrichtungen zur Fehlerkorrektur bei Positionsmeßsystemen sind bereits bekannt.

In der DE-PS 2 724 858 ist bei einem Längenmeßgerät eine Korrektureinrichtung mit einer Gliederkette beschrieben, die von einem Übertragungselement abgegriffen wird und deren Glieder gemäß dem Fehlerverlauf quer zur Meßrichtung einstellbar sind. Die Genauigkeit dieser Fehlerkorrektur ist von der Anzahl der Glieder pro Meßlängeneinheit abhängig.

Der DE-PS 2 820 753 ist eine Einrichtung zur Fehlerkorrektur bei Positionsmeßsystemen zu entnehmen, bei der ein Fehlerkorrekturprofil integrierender Bestandteil eines Trägers für einen Maßstab ist und von einem Übertragungselement abgegriffen wird, das eine korrigierende Relativbewegung zwischen einer Abtasteinheit und dem Maßstab bewirkt.

In der DE-OS 2 729 697 ist ein Verfahren zur Interpolation von periodischen Analogsignalen eines digitalen elektrischen Positionsmeßsystems angegeben, bei dem die Analogsignale digitalisiert und die Digitalwerte einem Rechner zur Bildung von Interpolationswerten zugeführt werden. Insbesondere bei hohem Unterteilungsfaktor werden vor dem Interpolationsvorgang zur Kompensation fehlerhafter Signalparameter der Analogsignale an den Digitalwerten noch Korrekturen vorgenommen, wobei die vorab ermittelten Korrekturwerte in einem Speicher des Rechners abgespeichert sind.

Bei den vorgenannten Patentschriften bedingen die zur Korrektur erforderlichen zusätzlichen mechanischen Elemente wesentlich größere Außenabmessungen eines derartigen Positionsmeßsystems, was einem flexiblen Einsatz dem Meßsystems abträglich sein kann. Bei dem Positionsmeßsystem der Offenlegungsschrift sind zur Korrektur aufwendige elektronische Elemente erforderlich.

Die DE-OS 1 623 905 enthält eine Vorrichtung, bei der ein gemeinsamer Träger für eine Meßteilung und eine Korrekturspur mit Strichmarkierungen vorgesen ist. Beide Abtastsignale werden getrennt als Impulse einer Anzeige- bzw. Steuereinheit zugeführt.

Der Erfindung liegt die Aufgabe zugrunde, eine Einrichtung zur Fehlerkorrektur bei Positionsmeßsystemen anzugeben, die ohne weiteres in handelsübliche Positionsmeßsysteme ohne wesentliche bauliche Veränderungen integriert werden kann und bei der überdies der Bedarf an mechanischen bzw. elektronischen Elementen weiter reduziert werden kann.

Diese Aufgabe wird erfindungsgemäß durch die Merkmale des Anspruchs 1 gelöst.

Die mit der Erfindung erzielten Vorteile bestehen insbesondere darin, daß die vorgeschlagene Korrektureinrichtung keiner aufwendigen mechanischen bzw. elektronischen Elemente bedarf, wodurch sich ein einfacher und kostengünstiger Aufbau eines Positionsmeßsystems ergibt. Wegen des geringen Raumbedarfs und des Fehlens verschleißbehafteter Teile ist ein flexibler und betriebssicherer Einsatz gewährleistet. Diese Einrichtung erlaubt die Korrektur linearer als auch nichtlinearer Fehler der Maßstabteilung und/oder der Maschinenführung unabhängig von der Meßlänge. Des weiteren ermöglicht diese Korrektur eine nachfolgende fehlerfreie Interpolation auch bei hohem Unterteilungsgrad.

Weitere vorteilhafte Ausbildungen der Erfindung 1 entnimmt man den Unteransprüchen.

Ausführungsbeispiele der Erfindung werden anhand der Zeichnung näher erläutert.

Es zeigen

| | |
|---|---|
| Figur 1a, b | einen Querschnitt und einen Längsschnitt durch ein Längenmeßsystem, |
| Figur 2a, b, c | drei Ansichten eines Maßstabs zur magnetischen Korrektur, |
| Figur 3 | ein Funktionsdiagramm, |
| Figur 4 | ein Blockschaltbild zur Fehlerkorrektur, |
| Figur 5 | einen Maßstab zur photoelektrischen Korrektur, |
| Figur 6 | einen weiteren Maßstab zur, photoelektrischen Korrektur und |
| Figur 7 | ein weiteres Blockschaltbild zur Fehlerkorrektur. |

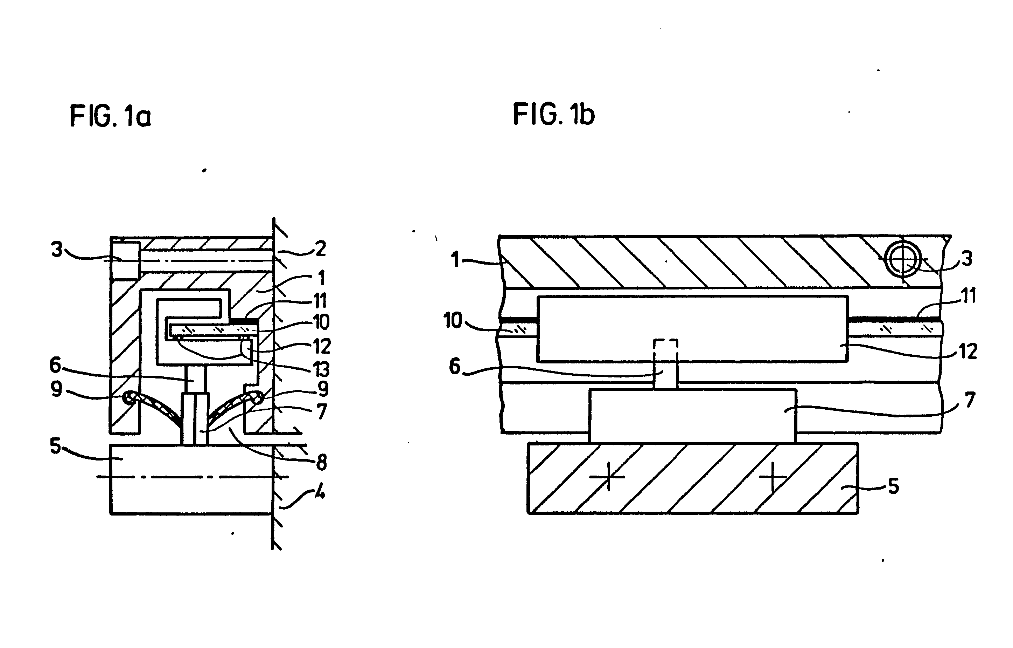

Nach Figur 1a, b ist ein Längenmeßsystem mit einem Gehäuse 1 in Form eines Hohlprofils an einem Bett 2 einer nicht dargestellten Bearbeitungsmaschine mittels einer Schraubverbindung 3 befestigt. An einem Schlitten 4 der Bearbeitungsmaschine ist ein Montagefuß 5 mit einem Mitnehmer 6 in beliebiger Weise befestigt, der über eine schwertförmige Verjüngung 7 durch einen Schlitz 8 in das im übrigen vollkommen geschlossene Gehäuse 1 hineinragt, wobei im Schlitz 8 vorgesehene elastische Dichtlippen 9 ein Eindringen von Verunreinigungen in das Innere des Gehäuses 1 verhindern. An einer Innenfläche des Gehäuses 1 ist ein Maßstab 10 mittels einer elastischen Klebeschicht 11 angebracht, an dem sich eine Abtasteinheit 12 über Rollen 13 abstützt und mit bekannten, nicht dargestellten Mitteln in Form einer Beleuchtungseinrichtung und von Photoelementen die Teilung 14 des Maßstabs 10 abtastet; die bei der Abtastung der Teilung 14 von der Abtasteinheit 12 gewonnenen periodischen Analogsignale werden einer nicht gezeigten Auswerte-/Anzeigeeinheit zur digitalen Anzeige der Relativlage zwischen Schlitten 4 und Bett 2 zugeführt. Die Relativbewegung des Schlittens 4 bezüglich des Betts 2 wird vom Mitnehmer 6 auf die Abtasteinheit 12 übertragen.

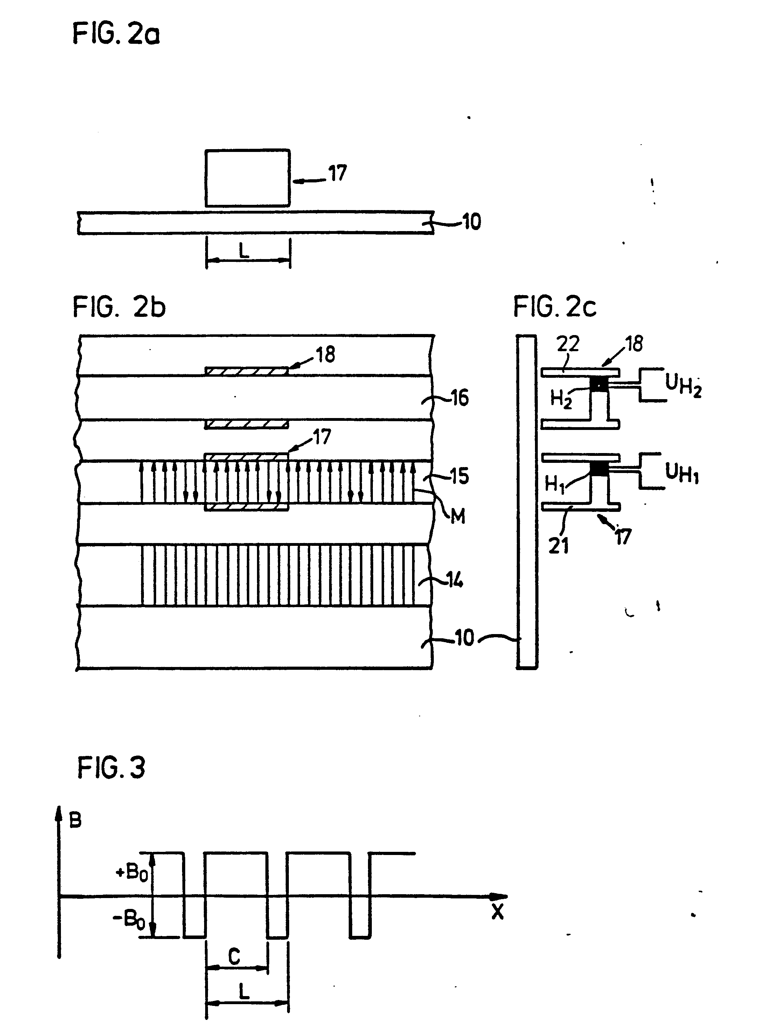

Gemäß Figur 2 sind zur Korrektur von Teilungsfehlern und/oder Maschinenführungsfehlern auf dem

2

transparenten Maßstab 10 neben der Teilung 14 erfindungsgemäß zwei Korrekturspuren 15, 16 in Form von magnetisierbaren Spuren zur magnetischen Aufzeichnung von Korrekturinformationen gemäß dem Fehlerverlauf vorgesehen, die jeweils von einem Hallelement 17, 18 in der Abtasteinheit 12 abgetastet werden. Diese Hallelemente 17, 10 bestehen aus den eigentlichen Hallgeneratoren $H_1$, $H_2$ und aus Eisenankern 21, 22 für den Eisenrückschluß. Die Korrekturspuren 15, 16 bestehen aus magnetisierbaren Folien, die auf dem Maßstab 10 parallel zur Teilung 14 aufgebracht sind. Diese Magnetfolien sind innerhalb von Perioden mit einer Periodenlänge L nach einem bestimmten Muster einmal positiv bis zur Sättigung und einmal negativ bis zur Sättigung magnetisiert; die Pfeile in der Korrekturspur 15 stellen die Magnetisierungsvektoren H dar (in der Korrekturspur 16 nicht dargestellt). In Figur 3 ist die von der Magnetisierung M der Korrekturspur 15 erzeugte magnetische Induktion B als Funktion des Meßweges x gezeigt.

Da das Hallelement 17 ebenfalls die Länge L aufweist (Figur 2a), erscheint am Ausgang des Hallgenerators $H_1$ die Hallspannung $U_{H1} = B_0 C - B_0(L - C) = B_0 (2C - L)$ als Mittelwert der beiden magnetischen Induktionen $\pm B_0$ innerhalb einer Periode. Wegen der Übereinstimmung der Länge L des Kallelements 17 mit der Periodizität L der Hagnetisierung H ändert sich die vom Hallelement 17 abgegebene Hallspannung $U_{H1}$ nicht, wenn das Hallelement 17 bewegt wird und das Tastverhältnis C/L konstant ist; eine Änderung des Tastverhältnisses C/L innerhalb der Periode L bewirkt eine Änderung der Hallspannung $U_{H1}$.

Es sei angenommen, daß die Abtasteinheit 12 des Längenmeßsystems bei der photoelektrischen Abtastung der Teilung 14 des Maßstabs 10 zwei exakt sinusförmige Analogsignale (z. B. Spannungen oder Ströme)

$$U_2 = a \sin x \text{ und} \tag{1}$$
$$U_2 = a \cos x$$

mit der maximalen Amplitude a liefert, die zur Richtungsdiskriminierung der Meßrichtung einen Phasenversatz von 90° aufweisen. Ist die Teilung 14 fehlerbehaftet, so müssen die beiden Analogsignale $U_1$, $U_2$ in ihrer Phasenlage korrigiert werden. Die korrigierten Analogsignale seien:

$$U_1' = a \sin (x + \varphi) = a \sin x \cos \varphi + a \cos x \sin \varphi \tag{2}$$
$$U_2' = a \cos (x + \varphi) = a \cos x \cos \varphi - a \sin x \sin \varphi$$

Setzt man Gleichung (1) in Gleichung (2) ein, so erhält man:

$$U_1' = U_1 \cos \varphi + U_2 \sin \varphi \tag{3}$$
$$U_2' = U_2 \cos \varphi - U_1 \sin \varphi$$

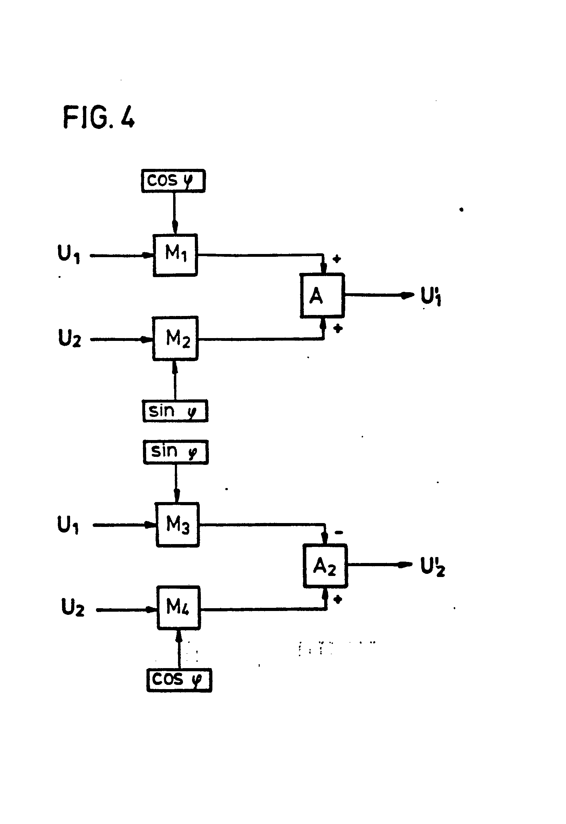

Um diese korrigierten Analogsignale $U_1'$, $U_2'$ zu gewinnen, sind also gemäß Figur 4 die beiden von der Abtasteinheit 12 gelieferten periodischen Analogsignale $U_1$, $U_2$ entsprechend Gleichung (3) jeweils mit Faktoren $\sin \varphi$, $\cos \varphi$ in Multiplizierern $M_1$, $M_2$, $M_3$, $M_4$ zu multiplizieren und anschließend in Addierern $A_1$, $A_2$ zu addieren. Der Winkeln ist dabei der Betrag, um den die Phasenlage der beiden Analogsignale $U_1$, $U_2$ zu korrigieren ist.

Für einen Maßstab mit der Gitterkonstanten g sind dabei zu setzen:

$$x = 2 \pi s/g$$
$$\varphi = 2 \pi f/g,$$

wobei s die Verschiebung der Abtasteinheit gegenüber dem Maßstab und f die Korrektur der Phase $\varphi$ bedeuteten.

Zur Fehlerkorrektur können die beiden Faktoren $\sin \varphi$, $\cos \varphi$ als Funktion des Meßwegs x aus den beiden Korrekturspuren 15, 16 längs der Teilung 14 des Maßstabs 10 (Figur 2b) gewonnen werden. Die Abtastung der Korrekturspuren 15, 16 durch die Hallelemente 17, 18 zur Gewinnung der Korrektursignale $\sin \varphi$, $\cos \varphi$ bietet den Vorteil der einfachen Ausführung der erforderlichen Multiplikationsvorgänge.

Die magnetisierten Korrekturspuren 15, 16 können in nicht gezeigter Weise auch von Feldplatten abgetastet werden. Eine besonders günstige Anordnung in Verbindung mit einer photoelektrischen Abtastung der Teilung des Maßstabs erhält man, wenn der Maßstab aus magnetisierbarem Material (z. B. Stahl) besteht. Ein derartiger Maßstab, der allerdings nur bei Auflichtmeßsystemen einsetzbar ist, kann gleichzeitig die optischen Teilungsinformation und die magnetischen Korrekturinformationen tragen.

Eine andere Möglichkeit besteht darin, unter dem Maßstab aus nicht ferromagnetischem Material (z. B. Stahl mit geringer Permeabilität und geringer Koerzitivfeldstärke) eine Schicht aus magnetisier barem Material anzuordnen.

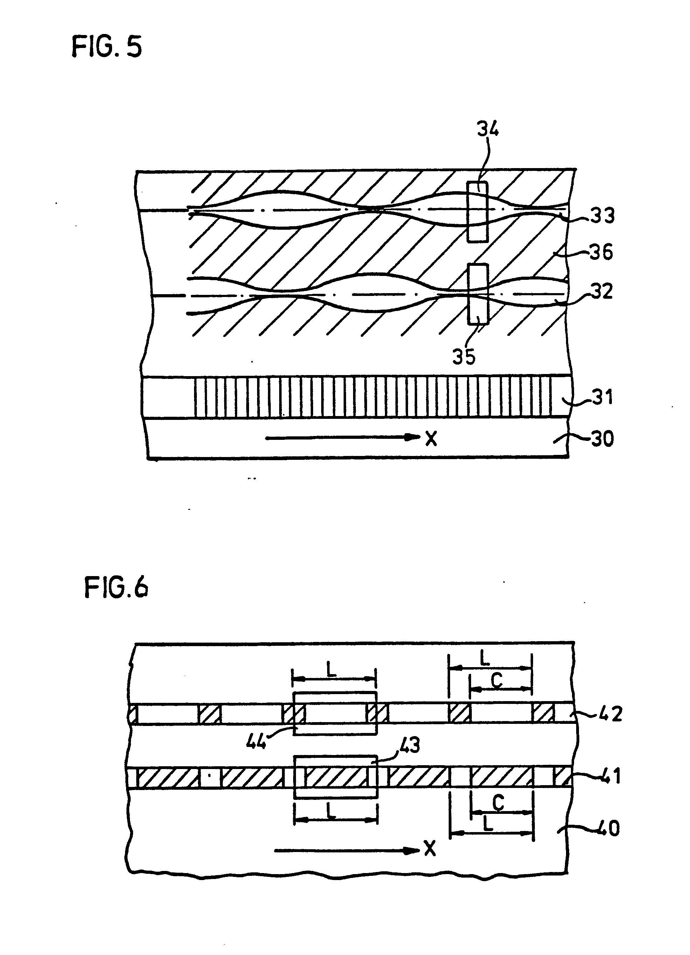

In einer anderen Ausbildung nach Figur 5 sind auf einem transparenten Maßstab 30 neben einer Teilung 31 erfindungsgemäß zwei Korrekturspuren 32, 33 vorgesehen, die mittels je eines Photoelements 34, 35 im Durchlicht abgetastet werden; die Teilung 31 möge ebenfalls photoelektrisch abgetastet werden. Diese Korrekturspuren 32, 33 zur optischen Aufzeichnung einer Korrekturinformation gemäß dem Fehlerverlauf bestehen dabei aus durchlässigen oder undurchlässigen Schichten auf dem Maßstab 30, die in der Breite entsprechend der Korrekturinformation moduliert sind. Die Erzeugung der transparenten Korrekturspuren 32, 33 in einer undurchlässigen Schicht 36 kann mittels eines Lasers oder durch Funkenerosion erfolgen. Da die Korrektursignale auch negative Vorzeichen besitzen können, ist jeweils immer ein Gegentakt erforderlich, die zwei Korrekturspuren 32, 33 dienen daher der Aufzeichnung einer einzigen Korrekturinformation.

Die Korrekturspuren können auch für eine photoelektrische Abtastung im Auflicht ausgebildet sein.

Auch bei den optischen Korrekturspuren ist ein Verfahren mit Pulsbreitenmodulation günstig, wie es oben schon bei der magnetischen Korrektur beschrieben wurde. In Figur 6 sind auf einem transparenten Maßstab 40 zwei Korrekturspuren 41, 42 neben einer nicht dargestellten Teilung zur optischen Aufzeichnung einer Korrekturinformation gezeigt, die von zwei im Gegentakt geschalteten Photoelementen 43, 44 in der Abtasteinheit 12 abgetastet werden; die Photoelemente 43, 44 oder die entsprechenden Abtastfelder besitzen die Länge L. Die Korrekturspuren 41, 42 besitzen ebenfalls die Periodenlänge L, wobei jede Periode aus einem durchsichtigen und aus einem undurchsichtigen Feld besteht. Bei der Korrekturspur 41 besitzt das undurchsichtige (gestrichelte) Feld die Länge C und das durchsichtige Feld die Länge L - C; bei der Korrekturspur 42 besitzt das durchsichtige Feld die Länge C und das undurchsichtige (gestricheltel Feld die Länge L - C. Die in Differenz geschalteten Photoelemente 43, 44 liefern demnach bei der Abtastung der Korrekturspuren 41, 42 die Spannung $U = U_0 (2C - L)$, die vom Tastverhältnis C/L abhängt und bei konstantem Verhältnis C/L unabhängig von der Bewegung der Photoelemente 43, 44 ist.

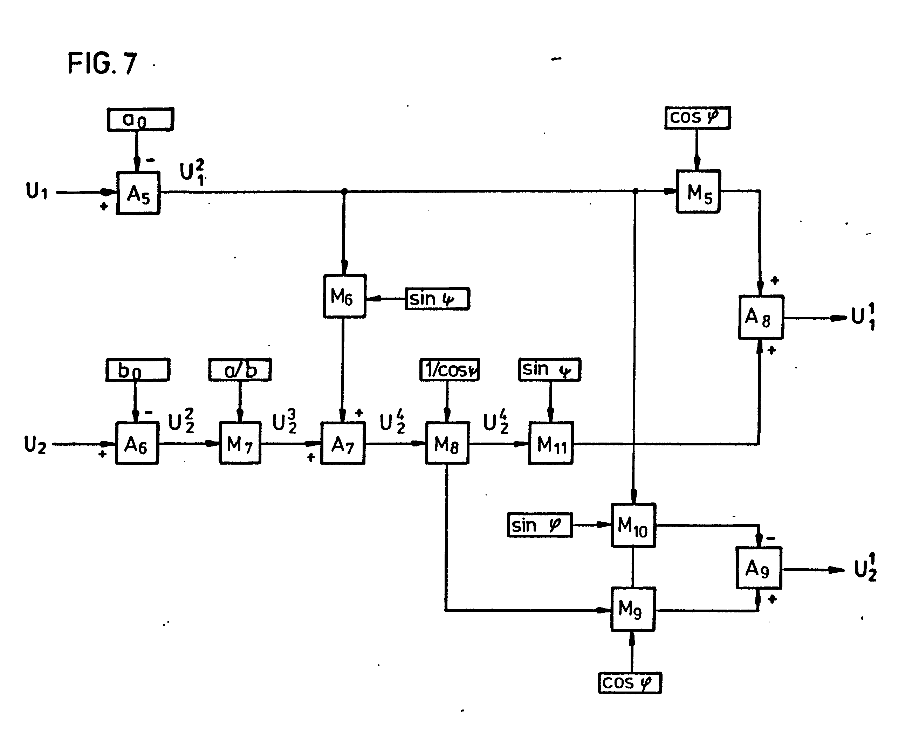

Eine weitere Korrektur von Maschinenführungsfehlern und Teilungsfehlern sei anhand der Figur 7 erläutert. Die Abtasteinheit des Längenmeßsystems möge die fehlerhaften Analogsignale liefern:

$$U_1 = a \sin x + a_0$$

$$U_2 = b \cos (x + \psi) + b_0 \tag{4}$$

Dabei bedeuten $a_0$, $b_0$ die Nullpunktsfehler der Analogsignale $U_1$, $U_2$ und $\psi$ den Fehler des Phasenwinkels zwischen den beiden Analogsignalen $U_1$, $U_2$ (der genau 90° betragen soll). Außerdem sollen die Analogsignale $U_1$, $U_2$ unterschiedliche Amplituden a, b und die Teilung außerdem noch einen Fehler entsprechend dem Phasenwinkel $\phi$ haben. Die korrigierten fehlerfreien Analogsignale sollen wieder lauten:

$$U_1^1 = a \sin (x + \phi)$$

$$U_2^1 = a \cos (x + \phi) \tag{5}$$

Zunächst werden die beiden Analogsignale $U_1$, $U_2$ nach Gleichung (4) bezüglich des Nullpunktes korrigiert, indem die Konstanten $a_0$, $b_0$ von den Analog signalen $U_1$, $U_2$ subtrahiert werden. Die beiden Konstanten $a_0$, $b_0$ sind wiederum Funktionen des Meßweges x und werden aus zwei Zusätzlichen Korrekturspuren auf dem Maßstab gewonnen.

Die derart korrigierten Analogsignale lauten nun:

$$U_1^2 = a \sin x$$

$$U_2^2 = b \cos (x + \psi) \tag{6}$$

Nun wird für das Analogsignal $U_2^2$ eine Amplitudenkorrektur durchgeführt. Es gilt:

$$\tfrac{a}{b}U_2^2 = \tfrac{a}{b} (b \cos (x + \psi)) = a \cos (x + \psi) = U_2^3 \tag{7}$$

Zur Korrektur wird also $U_2^2$ aus Gleichung (6) mit dem Faktor a/b multipliziert.

Das amplitudenkorrigierte Analogsignal $U_2^3$ wird nun noch bezüglich der Phase $\psi$ korrigiert. Es gilt:

$$U_2^3 = a \cos (x + \psi) = a \cos x \cos \psi - a \sin x \sin \psi \tag{8}$$

Daraus erhält man:

$$a \cos x = (U_2^3 + a \sin x \sin \psi) / \cos \psi \tag{9}$$

Für kleine Korrekturen $\psi$ gilt $\cos \psi \approx 1$ und damit ergibt sich:

$$U_2^4 = a \cos x = U_2^3 + a \sin x \sin \psi = \tfrac{a}{b} U_2^2 + U_1^2 \sin \psi \tag{10}$$

Nun ist noch mit den Signalen $U_1^2$ und $U_2^4$ eine Korrektur bezüglich der Phase $\phi$ durchzuführen. Aus Gleichung (5) erhält man wieder:

$$U_1^1 = a \sin x \, \text{con} \, \phi + a \cos x \sin \phi = U_1^2 \cos \phi + U_2^4 \sin \phi$$

$$U_2{}^1 = a \cos x \cos \varphi - a \sin x \sin \varphi = U_2{}^4 \cos \varphi - U_1{}^2 \sin \varphi \qquad (11)$$

Für die gesamte Korrektur sind also die Korrektursignale $a_o$, $b_o$, $a/b$, $\sin \psi$, $\sin \varphi$, $\cos \varphi$ erforderlich, die jeweils durch Korrekturspuren auf dem Maßstab gewonnen werden können.

Es sind folgende Operationen erforderlich:

$$U_1{}^2 = U_1 - a_o$$

Nullpunktskorrektur

$$U_2{}^2 = U_2 - b_o$$

$$U_2{}^3 = \tfrac{a}{b} U_2{}^2$$

Amplitudenkorrektur

$$U_2{}^4 = U_2{}^3 + U_1{}^2 \sin \psi$$ 　　Phasenwinkelkorrektur

$$[U_2{}^4 = (U_2{}^3 + U_1{}^2 \sin \psi) / \cos \psi$$ 　　bei großem Korrekturwinkel]

$$U_1{}^1 = U_1{}^2 \cos \varphi + U_2{}^4 \sin \varphi$$

Maschinen- und Teilungskorrektur

$$U_2{}^1 = U_2{}^4 \cos \varphi - U_1{}^2 \sin \varphi$$

Falls die Phasenwinkelkorrektur $\psi$ zwischen den beiden Analogsignalen $U_1$, $U_2$ groß ist und deshalb $\cos \psi \approx 1$ nicht mehr gilt, so kann statt Gleichung (10) geschrieben werden:

$$U_2{}^4 = \tfrac{1}{\cos \psi} (U_2{}^3 + a \sin x \sin \psi) = \tfrac{a}{b \cos \psi} U_2{}^2 + U_1{}^2 \tan \psi \qquad (12)$$

Es ist also noch ein zusätzliches Korrektursignal $1/\cos \psi$ notwendig, das aus einer weiteren Korrekturspur gewonnen werden kann. Die Aufteilung der Korrekturen in die Korrektursignale $\sin \psi$ und $1/\cos \psi$ oder $\tan \psi$ und $1/\cos \psi$ oder auch $a/b \cos \psi$ und $\tan \psi$ ist dabei wahlweise möglich.

Die Gewinnung der korrigierten Analogsignale $U_1{}^1$, $U_2{}^1$ aus den fehlerhaften Analogsignalen $U_1$, $U_2$ mittels Multiplizierer $M_5 - M_{11}$ und Addierer $A_5 - A_9$ ist der Figur 7 unschwer zu entnehmen, diese mathematischen Operationen können mit handelsüblichen Bauelementen durchgeführt werden, die in der Auswerteeinheit vorhanden sind.

Die Korrekturspuren können auch für eine induktive oder kapazitive Abtastung von Korrekturinformationen ausgebildet sein.

Die vorgeschlagene Korrektureinrichtung ist auch bei magnetischen, induktiven und kapazitiven Positionsmeßsystemen mit Erfolg einsetzbar.

**Patentansprüche**

1. Einrichtung zur Fehlerkorrektur, insbesondere von Maschinenfehlern und/oder Teilungsfehlern, bei Positionsmeßsystemen von Präzisionsmaschinen oder Präzisionsgeräten, bei der zur Messung der Relativlage zweier Objekte ein Maßstab mit dem einen Objekt verbunden ist und die Teilung des Maßstabes von einer Abtasteinheit abgetastet wird, die mit dem anderen Objekt der Maschine oder des Geräts verbunden ist, bei der die von der Abtasteinheit bei der Abtastung der Teilung gewonnenen periodischen Analogsignale einer Auswerteeinheit zugeführt werden, daß und bei der der Teilung (14; 31) des Maßstabs (10, 30; 40) Korrekturinformationen aufweisende Korrekturspuren (15, 16; 32, 33; 41, 42) zugeordnet sind, dadurch gekennzeichnet, die Korrekturspuren von Elementen (17, 18; 34, 35; 43, 44) der Abtasteinheit (12) zur Erzeugung analoger Korrektrusignale abtastbar sind und eine analoge Schaltung vorhanden ist, in der die analogen Korrekttursignale zur Korrektur von fehlerhaften Signalparametern den von der Abtasteinheit (12) gewonnenen Analogsignalen ($U_1$, $U_2$; $J_1$, $J_2$) überlagert werden.

2. Einrichtung nach Anspruch 1, dadurch gekennzeichnet, daß die Korrekturinformationen auf den Korrekturspuren (15, 16) magnetisch abtastbar aufgezeichnet sind.

3. Einrichtung nach Anspruch 1, dadurch gekennzeichnet, daß die Korrekturinformationen auf den Korrekturspuren (32, 33; 41, 42) optisch abtastbar aufgezeichnet sind.

4. Einrichtung nach Anspruch 2, dadurch gekennzeichnet, daß die Korrekturspuren (15, 16) durch eine magnetisierbare Folie gebildet werden.

5. Einrichtung nach Anspruch 2, dadurch gekennzeichnet, daß die Korrekturspuren (15, 16) durch eine magnetisierbare Schicht gebildet werden.

6. Einrichtung nach Anspruch 2, dadurch gekennzeichnet, daß die Korrekturspuren (15, 16) in Bereiche mit konstanter Länge L aufgeteilt sind, wobei jeder Bereich der Länge L in zwei Teilbereich der Länge C und L - C mit verschiedener Magnetisierung unterteilt ist und die Korrekturinformation durch Veränderung des

5

Tastverhältnisses C/L aufgezeichnet ist.

7. Einrichtung nach Anspruch 2, dadurch gekennzeichnet, daß die Korrekturspuren (15, 16) durch Hallelemente (17, 18) abgetastet werden.

8. Einrichtung nach Anspruch 2, dadurch gekennzeichnet, daß die Korrekturspuren (15, 16) durch Feldplatten abgetastet werden.

9. Einrichtung nach den Ansprüchen 2, 6 und 7 oder 2, 6 und 8, dadurch gekennzeichnet, daß die Länge der Hallelemente (17, 18) oder der Feldplatten mit der Länge L eines Bereiches der Korrekturspuren (15, 16) übereinstimmt.

10. Einrichtung nach Anspruch 1, dadurch gekennzeichnet, daß der Maßstab aus magnetisierbarem Material, insbesondere Stahl, besteht.

11. Einrichtung nach Anspruch 3, dadurch gekennzeichnet, daß die Korrekturspuren (32, 33; 41, 42) durch Photoelemente (34, 35; 43, 44) der Abtasteinheit (12) im Durchlicht oder Auflicht abgetastet werden.

12. Einrichtung nach Anspruch 3, dadurch gekennzeichnet, daß die Korrekturspuren (32, 33) aus transparenten Bahnen in einer lichtundurchlässigen Schicht (36) bestehen.

13. Einrichtung nach Anspruch 12, dadurch gekennzeichnet, daß die transparenten Bahnen veränderliche Breite aufweisen.

14. Einrichtung nach Anspruch 12, dadurch gekennzeichnet, daß die transparenten Bahnen mittels eines Lasers oder durch Funkenerosion erzeugt sind.

15. Einrichtung nach Anspruch 3, dadurch gekennzeichnet, daß die Korrekturspuren (41, 42) in Bereiche mit konstanter Länge L aufgeteilt sind, wobei jeder Bereich der Länge L in zwei Teilbereiche der Länge C und L - C unterteilt ist, von denen einer transparent und einer lichtundurchlässig ist, und wobei die Korrekturinformation durch Veränderung des Tastverhältnisses C/L aufgezeichnet ist.

16. Einrichtung nach den Ansprüchen 3, 11 und 15, dadurch gekennzeichnet, daß die Länge der Photoelemente (43, 44) mit der Länge L eines Bereiches der Korrekturspuren (41, 42) übereinstimmt.

17. Einrichtung nach Anspruch 3, dadurch gekennzeichnet, daß die Korrekturspuren (32, 33; 41, 42) als Gegentaktspuren ausgebildet sind.

18. Einrichtung nach Anspruch 1, dadurch gekennzeichnet, daß die Korrekturinfformationen aus den Korrekturspuren induktiv abtastbar aufgezeichnet sind.

19. Einrichtung nach Anspruch 1, dadurch gekennzeichnet, daß die Korrekturinformationen auf den Korrekturspuren kapazitiv abtastbar aufgezeichnet sind.

## Claims

1. Device for error correction, in particular machine errors and/or dividing errors, in position measuring systems of precision machines or precision instruments, in which for measurement of the relative position of two objects, a scale is connected to one object and the graduation of the scale is scanned by a scanning unit which is connected to the other object of the machine or instrument, in which the periodic analogue signals obtained by the scanning unit during scanning of the graduation are transmitted to an analyser unit, and in which correction tracks (15, 16; 32, 33; 41, 42) comprising correction data are associated with the graduation (14; 31) of the scale (10; 30; 40), characterised in that the correction tracks can be scanned by components (17, 18; 34, 35; 43, 44) of the scanning unit (12) to generate analogue correction signals, and there is an analogue circuit in which the analogue correction signals for correction of erroneous signal parameters are superimposed on the analogue signals ($U_1$, $U_2$; $J_1$, $J_2$) obtained by the scanning unit (12).

2. Device according to claim 1, characterised in that the correction data are recorded on the correction tracks (15, 16) so as to allow magnetic scanning.

3. Device according to claim 1, characterised in that the correction data are recorded on the correction tracks (32, 33; 41, 42) so as to allow optical scanning.

4. Device according to claim 2, characterised in that the correction tracks (15, 16) are formed by a magnetisable foil.

5. Device according to claim 2, characterised in that the correction tracks (15, 16) are formed by a magnetisable coating.

6. Device according to claim 2, characterised in that the correction tracks (15, 16) are divided into areas of constant length L, wherein each area of length L is subdivided into two partial areas of length C and L - C with different degrees of magnetisation and the correction data are recorded by altering the keying ratio C/L.

7. Device according to claim 2, characterised in that the correction tracks (15, 16) are scanned by Hall elements (17, 18).

8. Device according to claim 2, characterised in that the correction tracks (15, 16) are scanned by magnetoresistors.

9. Device according to claims 2, 6 and 7 or 2, 6 and 8, characterised in that the length of the Hall elements (17, 18) or magnetoresistors corresponds to the length L of an area of the correction tracks (15, 16).

10. Device according to claim 1, characterised in that the scale is made of magnetisable material, in particular steel.

11. Device according to claim 3, characterised in that the correction tracks (32, 33; 41, 42) are scanned by photocells (34, 35; 43, 44) of the scanning unit (12) by transmitted or incident light.

12. Device according to claim 3, characterised in that the correction tracks (32, 33) consist of transparent webs in an opaque layer (36).

13. Device according to claim 12, characterised in that the transparent webs have varying widths.

14. Device according to claim 12, characterised in that the transparent webs are produced by means of a laser or by electroerosion.

15. Device according to claim 3, characterised in that the correction tracks (41, 42) are divided into areas of constant length L, wherein each area of length L issubdivided into two partial areas of length C and L - C, one of which is transparent and one opaque, and wherein the correction data are recorded by altering the keying ratio C/L.

16. Device according to claims 3, 11 and 15, characterised in that the length of the photocells (43, 44) corresponds to the length L of an area of the correction tracks (41, 42).

17. Device according to claim 3, characterised in that the correction tracks (32, 33; 41, 42) are constructed as push-pull tracks.

18. Device according to claim 1, characterised in that the correction data are recorded on the correction tracks so as to allow inductive scanning.

19. Device according to claim 1, characterised in that the correction data are recorded on the correction tracks so as to allow capacitive scanning.

## Revendications

1. Dispositif de correction d'erreurs, notamment d'erreurs de machine et/ou d'erreurs de graduation dans les systèmes de mesure de position de machines de précison ou d'appareils de précision, dans lequel, pour mesurer la position relative de deux objets, une règle graduée est liée à un premier objet et la graduation de la règle est lue par une unité de lecture qui est liée à l'autre objet de la machine ou de l'appareil, dans lequel les signaux analogiques périodiques obtenus par l'unité de lecture lors de la lecture de la graduation sont envoyés à une unité d'interprétation, et dans lequel des pistes de correcton (15, 16; 32, 33; 41, 42) présentant des informations de correction sont associées à la graduaton (14; 31) de la règle graduée, caractérisé par le fat que les pistes de correction sont lisibles par des éléments (17, 18; 34, 35; 43, 44) de l'unité de lecture (12) pour produire des signaux analogiques de correction, et qu'il est prévu un circuit analogique dans lequel les signal de correction analogiques, pour la correction de paramètres de signaux entachés d'erreurs, sont superposés à signaux analogiques ($U_1$, $U_2$; $J_1$, $J_2$) obtenus par l'unité de lecture (12).

2. Dispositif selon revendication 1, caractérisé par le fait que les informations de correction sont enregistrées sur les pistes de correction (15, 16) de manière à pouvoir être lues magnétiquement.

3. Dispositif selon revendication 1, caractérisé par le fait que les informations de correction sont enregistrées sur les pistes de correction (32, 33; 41, 42) de manière à pouvoir être lues optiquement.

4. Dispositif selon revendication 2, caractérisé par le fait que les pistes de correction (15, 16) sont formées par une feuille magnétsable.

5. Dispositif selon revendication 2, caractérisé par le fait que les pistes de correcton (15, 16) sont formées par une couche magnétsable.

6. Dispositif selon revendication 2, caractérisé par le fait que les pistes de correction (15, 16) sont divisées en domaines de longueur L constante, chaque domaine de longueur L étant subdivisé en deux domaines partiels de longueurs C et L - C avec magnétisation différente, et l'information de correction est enregistrée par modification du taux d'impulsions C/L.

7. Dispositif selon revendication 2, caractérisé par le fait que les pistes de correction (15, 16) sont lues au moyen d'éléments Hall (17, 18).

8. Dispositif selon revendication 2 caractérisé par le fait que les pistes de correction (15, 16) sont lues par des magnétorésistances.

9. Dispositif selon les revendications 2, 6 et 7 ou 2, 6 et 8, caractérisé par le fait que la longueur des éléments Hall (17, 18) ou des magnétorésistances concorde avec la longueur L d'un domaine des pistes de correction (15, 16).

10. Dispositif selon revendication 1, caractérisé par le fait que la règle graduée est en une matière magnétisable, notamment en acier.

11. Dispositif selon revendication 3, caractérisé par le fait que les pistes de correction (32, 33; 41, 42) sont lues, en lumière réfléchie ou en lumière transmise, par des èléments photo-électriques (34, 35; 43, 44) de l'unité de lecture.

12. Dispositif selon revendication 3, caractérisé par le fait que les pistes de correction (32, 33) consistent en pistes transparentes dans une couche opaque (36).

13. Dispositif selon revendication 12, caractérisé par le fait que les pistes transparentes présentent une largeur variable.

14. Dispositif selon revendication 12, caractérisé par le fait que les pistes transparentes sont produites au moyen d'un laser ou par étincelage.

15. Dispositif selon revendication 3, caractérisé par le fait que les pistes de correction (41, 42) sont divisées

7

en domaines de longueur constante L, chaque domaine de longueur L étant subdivisé en deux domaines partiels de longueurs C et L - C dont l'un est transparent et l'autre opaque, l'information de correction étant enregistrée par modification du taux d'impulsions C/L.

16. Dispositif selon les revendications 3, 11 et 15, caractérisé par le fait que la longueur des éléments photoélectriques (43, 44) concorde avec la longueur L d'un domaine des pistes de correction (41, 42).

17. Dispositif selon revendication 3, caractérisé par le fait que les pistes de correction (32, 33; 41, 42) sont réalisées en tant que pistes à symétrie d'opposition.

18. Dispositif selon revendication 1, caractérisé par le fait que les informations de correction sont enregistrées sur les pistes de correction de manière à pouvoir être lues inductivement.

19. Dispositif selon revendication 1, caractérisé par le fait que les informations de correction sont enregistrées sur les pistes de correction de manière à pouvoir être lues capacitivement.

FIG. 1a

FIG. 1b

0 085 148

FIG. 2a

17

L

10

FIG. 2b

18

16

17

15

M

14

10

FIG. 2c

22    18

$H_2$    $U_{H_2}$

$H_1$    $U_{H_1}$

21    17

FIG. 3

B

$+B_0$

$-B_0$

X

C

L

# FIG. 4

# FIG. 5

# FIG. 6

FIG. 7